# EUROPEAN PATENT APPLICATION

(11) **EP 2 254 344 A1**
(43) Date of publication of application: **24.11.2010**
(21) Application number: 09726250.5
(22) Date of filing: 20.03.2009
(51) Int. Cl.: H04Q 1/14, H01R 13/00

(54) **ELECTRICAL CONNECTION MODULE, MAIN DISTRIBUTION FRAME AND CHANGEOVER METHOD THEREOF**

(30) Priority: 24.03.2008 CN 200810066191
(71) Applicant: Huawei Technologies Co., Ltd., Longgang District, Shenzhen Guangdong 518129 (CN)
(72) Inventor: QIN, Ying, Guangdong 518129 (CN); YUAN, Ming, Guangdong 518129 (CN); ZHANG, Chen, Guangdong 518129 (CN); ZHANG, Xuedong, Guangdong 518129 (CN); YAO, Jiang, Guangdong 518129 (CN); WANG, Wei, Guangdong 518129 (CN); LIU, Dajiang, Guangdong 518129 (CN); LIU, Xiaozeng, Guangdong 518129 (CN); WU, Ke, Guangdong 518129 (CN); XIE, Xiaodong, Guangdong 518129 (CN)
(74) Representative: Körber, Martin Hans
(86) International application number: PCT/CN2009/070907
(87) International publication number: WO 2009/117931

(57) **Abstract**

A main distribution frame comprises an external line module, an internal line module, a cutover module connected with the internal line module and a cutover plug which is plugged into the internal line module and the cutover module, the cutover plug separates jumper-side terminations of the internal line module from equipment-side terminations of the internal line module, and the jumper-side terminations of the internal line module are electrically connected to equipment-side terminations of the cutover module through the cutover plug.

## Description

The present application claims the priority of Chinese patent application titled as "Electrical Connection Module, Main Distribution Frame and Cutover Method Thereof", numbered as 200810066191.6, and filed to the State Intellectual Property Office of the P.R.C on March 24, 2008, and all contents thereof are incorporated herein by reference.

### FIELD OF THE INVENTION

The present invention relates to the communications field, and particularly, to an electrical connection module, a main distribution frame and a cutover method of the main distribution frame.

### BACKGROUND OF THE INVENTION

With the development of technology, communications become more and more important in people's life, and people's demands become personalized and intellectualized on the basis of communications network. In order to meet the variation of market demands, the communications network service shall be innovated and optimized continuously. During the process of network optimization, the service on the used equipment shall be changed over to the new equipment.

A cutover means that when the original equipment is updated, the subscriber line is supported by the new equipment instead of the old equipment, i.e., a process in which the new equipment is put into operation and the old equipment is shut down. Because the communication shall be continuous at any time and the call should not be interrupted during the cutover, the cutover is commonly performed at "zero o'clock", the most idle time of phone call.

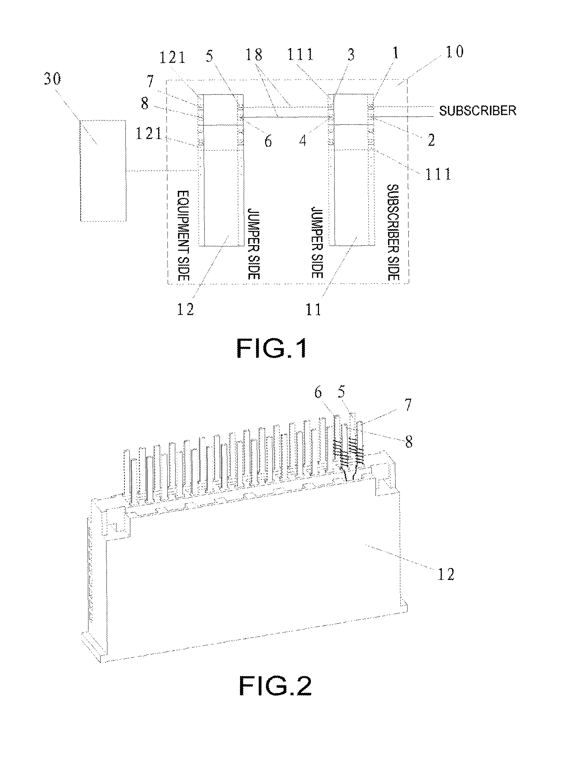

Referring to Fig. 1, illustrated is a schematic diagram of the existing communications network, including a main distribution frame 10. The main distribution frame 10 has two ends, one end is connected to terminal equipment, and the other end is connected to a station-side equipment 30. The main distribution frame 10 includes an external line module 11 having several interfaces 111, and an internal line module 12 having several interfaces 121 that correspond to the interfaces of the external line module 11.

The terminal equipment is connected to the external line module 11 of the main distribution frame 10 through a cable, then connected to the internal line module 12 of the main distribution frame 10 through jumpers 18, and finally connected to the station-side old equipment 30 through a cable. In this way, the station-side old equipment 30 may provide related services to the subscriber-side terminal equipment.

One interface 111 has four terminations, i.e., termination 1, termination 2, termination 3 and termination 4. One interface 121 also has four terminations, i.e., termination 5, termination 6, termination 7 and termination 8. The terminations 1 and 2 are connected to subscriber 1 of the terminal equipment through a twisted pair-wire, the terminations 3 and 4 are connected to the terminations 5 and 6 through the jumpers, and the terminations 7 and 8 are connected to the station-side old equipment 30 through an old twisted pair-wire.

Referring to Fig. 2, illustrated is a schematic diagram of the internal line module 12 of the existing main distribution frame. The internal line module 12 is a wire-wrap type internal line module. The following description takes an interface of the internal line module as an example, wherein the terminations 5 to 8 are wire-wrap type terminations.

When the station-side old equipment needs to be replaced, with respect to the wire-wrap type internal line module 12, the terminations 7 and 8 at the station-side equipment-side of the internal line module 12 shall be additionally connected with a new twisted pair-wire, through which a connection is made to a station-side new equipment. Then the old twisted pair-wire connected to the terminations 7 and 8 at the equipment-side of the internal line module 12 shall be cut off, so that the station-side new equipment provides related service to the subscriber.

During the process of implementing the present invention, the inventor finds that the prior art has at least the following problem:

When a space of the terminations of the wire-wrap type internal line module that can be additionally connected to is small, the space for the new twisted pair-wire to be wire-wrapped to the terminations 7 and 8 is very limited after the old twisted pair-wire are connected to the terminations 7 and 8, thus the new twisted pair-wire will easily drop off from the terminations 7 and 8, and therefore, the additional connection reliability is poor.

### SUMMARY OF THE INVENTION

The embodiments of the present invention provide an electrical connection module, a main distribution frame, or a cutover method for main distribution frame. A connection is made to an internal line module through a cutover module, and the problem of poor additional connection reliability is avoided through a cutover plug.

The embodiments of the present invention provide an electrical connection module. The electrical connection module includes an internal line module (14), a cutover plug (17), and a cutover module (16) connected to the internal line module (14). The cutover plug (17) is configured to be inserted into the internal line module (14) and the cutover module (16), to separate jumper-side terminations of the internal line module (14) from equipment-side terminations of the internal line module (14), and to electrically connect the jumper-side terminations of the internal line module (14) to equipment-side terminations of the cutover module (16) through the cutover plug (17).

The embodiments of the present invention provide a main distribution frame. The main distribution frame includes an external line module (13) having jumper-side terminations and subscriber-side terminations, and an internal line module (14) having jumper-side terminations and equipment-side terminations. The jumper-side terminations of the external line module (13) are electrically connected to the jumper-side terminations of the internal line module (14). The main distribution frame further includes a cutover module (16) and a cutover plug (17), where the cutover module (16) is configured to be connected to the internal line module (14), and the cutover plug (17) is configured to be inserted into the internal line module (14). The cutover module (16) is configured to separate the jumper-side terminations of the internal line module (14) from the equipment-side terminations of the internal line module (14), and to electrically connect the jumper-side terminations of the internal line module (14) to the equipment-side terminations of the cutover module (16) through the cutover plug (17).

The embodiments of the present invention provide a cutover method for main distribution frame. The method includes:
connecting a cutover module (16) with an internal line module (14);
connecting equipment-side terminations of the cutover module (16) to new equipment; and
inserting a cutover plug (17) into the internal line module (14) and the cutover module (16), the cutover plug (17) is configured to separate jumper-side terminations of the internal line module (14) from equipment-side terminations of the internal line module (14), and electrically connect the jumper-side terminations of the internal line module (14) to the equipment-side terminations of the cutover module (16) through the cutover plug (17).

As can be seen from the above, the internal line module (14) is connected to a cutover module (16), and the jumper-side terminations of the internal line module (14) are electrically connected to the equipment-side terminations of the cutover module (16) through the cutover plug (17). This avoids the problem of poor additional connection reliability.

### BRIEF DESCRIPTION OF THE DRAWINGS

Fig. 1 is a schematic diagram of an existing communications network;
Fig. 2 is a schematic diagram of an internal line module of an existing main distribution frame;
Fig. 3 is a schematic diagram of a communications network according to an embodiment of the present invention;
Fig. 4 is a schematic structure diagram of an abutment of two terminations of an interface of an external line module according to an embodiment of the invention;
Fig. 5 is a schematic structure diagram of an abutment of two terminations of an interface of an internal line module according to an embodiment of the invention;
Fig. 6 is a schematic diagram of an insertion of a cutover plug into two terminations of the internal line module and a cutover module according to an embodiment of the invention;
Fig. 7 is a schematic structure diagram of a surface of the cutover plug according to an embodiment of the invention;
Fig. 8 is a schematic structure diagram of another surface of the cutover plug according to an embodiment of the invention;
Fig. 9 is a schematic structure diagram of a connection between the internal line module and the cutover module according to an embodiment of the invention;
Fig. 10 is a partial enlarged drawing of Fig. 9;
Fig. 11 is a schematic diagram of a surface of the cutover plug inserted into the internal line module and the cutover module according to an embodiment of the invention;
Fig. 12 is a partial enlarged drawing of Fig. 11;
Fig. 13 is a schematic diagram of another surface of the cutover plug inserted into the internal line module and the cutover module according to an embodiment of the invention;
Fig. 14 is a partial enlarged drawing of Fig. 13;
Fig. 15 is a schematic diagram of the assembly of the cutover plug, the cutover module and the internal line module.
Fig. 16 is a schematic diagram of a connection between the cutover module and the external line module according to an embodiment of the invention.

### DETAILED DESCRIPTION OF INVENTION

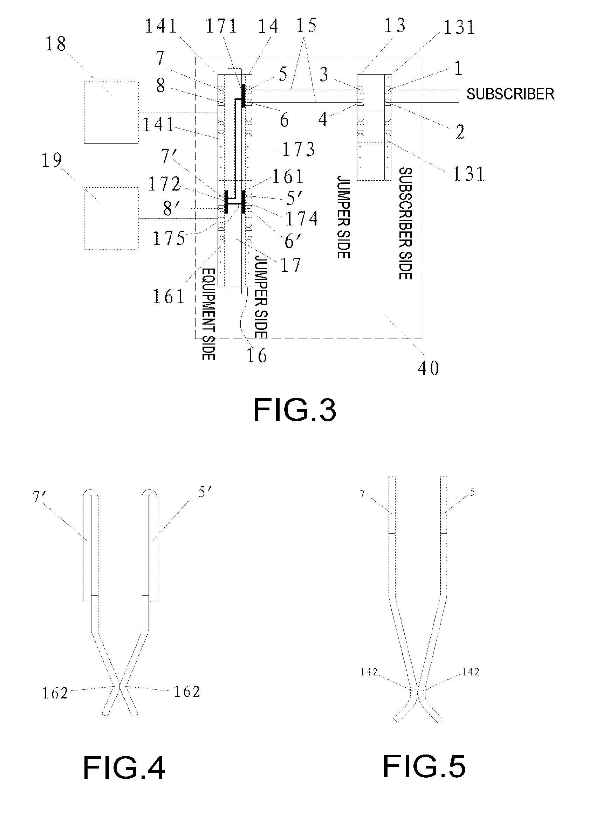

Referring to Fig. 3, illustrated is a schematic diagram of a communications network according to an embodiment of the present invention, including a main distribution frame 40, terminal equipment (subscriber side), connected to the main distribution frame 40 through a cable, and a station-side equipment connected to the main distribution frame 40 through a cable. In this way, the station-side equipment may provide related services to the subscriber.

The main distribution frame 40 includes an external line module 13, an internal line module 14 and a cutover module 16 connected to the internal line module 14. There are several terminations provided in the external line module 13, the internal line module 14 and the cutover module 16.

For the convenience of description, in the embodiments of the present invention, a termination of the external line module 13 for connection with the subscriber side is defined as a subscriber-side termination; a termination of the external line module 13 for connection with the internal line module 14 is defined as a jumper-side termination of the external line module 13; similarly, a termination of the internal line module 14 for connection with the external line module 13 is defined as a jumper-side termination of the internal line module 14; and a termination of the internal line module 14 for connection with the station-side equipment is defined as an equipment-side termination of the internal line module 14; similarly, terminations of the cutover module 16 are defined as jumper-side termination and equipment-side termination of the cutover module 16.

Further referring to Fig. 3, in the external line module 13, the subscriber-side terminations are connected with a subscriber through a twisted pair-wire, and the jumper-side terminations of the external line module 13 corresponding to the subscriber-side terminations are defined as an interface 131.

The station-side equipment provides a service to a subscriber. In the internal line module 14, the equipment-side terminations of the internal line module 14, and the jumper-side terminations of the internal line module 14 corresponding to the equipment-side terminations of the internal line module 14 are defined as an interface 141.

Similarly, the station-side equipment provides a service to a subscriber, and the equipment-side terminations of the cutover module 16 and the jumper-side terminations of the cutover module 16 corresponding to the equipment-side terminations of the cutover module 16 are defined as an interface 161.

Referring to Fig. 3, the external line module 13 includes several interfaces 131, wherein one interface 131 includes four terminations, i.e., terminations 1 to 4.

The internal line module 14 includes several interfaces 141, wherein one interface includes four terminations, i.e., terminations 5 to 8.

Referring to Fig. 4, illustrated is a schematic structure diagram of terminations 5' and 7' of one interface 161 of the cutover module 16. Elastic sheets 162 of the terminations 5' and 7' are abutted against each other in a normal close state, i.e., the terminations 5' and 7' are electrically connected to each other.

Referring to Fig. 5, illustrated is a schematic interface diagram of terminations 5 and 7 of one interface 141 of the internal line module 14. Elastic sheets 142 of the terminations 5 and 7 are abutted against each other in a normal close state, i.e., the terminations 5 and 7 are electrically connected to each other.

Similarly, the terminations 2 and 4 of one interface 131 of the external line module 13 are also in the normal close state. The terminations 6 and 8 of one interface 141 of the internal line module 14 are also in the normal close state. That is to say, terminations 1 and 3 are electrically connected, terminations 2 and 4 are electrically connected, terminations 5 and 7 are electrically connected, and terminations 6 and 8 are electrically connected.

The following descriptions take an example in which one interface 131 of the external line module 13 corresponds to one interface 141 of the internal line module 14.

The terminations 1 and 2 of one interface 131 of the external line module 13 are connected to a subscriber through a twisted pair-wire; the terminations 3 and 4 are connected to the terminations 5 and 6 of one interface 141 of the internal line module 14 through the jumpers 15; the terminations 7 and 8 are connected to an station-side old equipment 18 through a twisted pair-wire. Thus a path is formed from the station-side to the terminal, so that the station-side old equipment 18 can provide corresponding service to the subscriber.

Further referring to Fig. 3, when the station-side old equipment 18 needs to be replaced, a cutover module 16 connected to the internal line module 14 is added. The cutover module 16 includes several interfaces 161, wherein one interface 161 includes terminations 5', terminations 6', terminations 7' and terminations 8'. The exemplary structure of the termination of the cutover module 16 may be the structure of the cutover module termination in Fig. 4, or the structure of the internal line module termination in Fig. 5, wherein the terminations 5' and 7', and the terminations 6' and 8' are all in the normal close state. The terminations 7' and 8' are connected to a station-side new equipment 19 through a twisted pair-wire.

The following descriptions take an example in which one interface 161 of the cutover module 16 corresponds to one interface 141 of the internal line module 14.

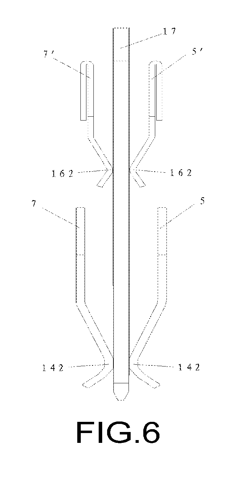

Referring to Fig. 6, a cutover plug 17 is inserted between the terminations 5 and 7, between the terminations 6 and 8 of the internal line module 14, between the terminations 5' and 7', and between the terminations 6' and 8' of the cutover module 16, so that the terminations 5 and 7 of the internal line module 14 are in the open state, and the terminations 6 and 8 of the internal line module 14 are in the open state, the terminations 5' and 7'of the cutover module 16 are in the open state, and the terminations 6' and 8' of the cutover module 16 are in the open state, wherein the open state is the separated state. The cutover plug 17 may be a printed circuit board, wherein, referring to Fig. 3, on one surface of the cutover plug 17, a bus-bar 171 is provided at a portion that contacts the terminations 5 and 6, on the other surface of the cutover plug 17, a bus-bar 172 is provided at a portion that contacts the terminations 7' and 8', and the bus-bars 171 and 172 are connected to each other through a circuit line 173. It can be seen that the cutover plug 17 is inserted into the internal line module 14 and the cutover module 16, and it separates the jumper-side terminations of the cutover module 16 from the equipment-side terminations of the cutover module 16.

As can be seen from the above, the station-side new equipment 19 connects to the terminations 5 and 6 of the internal line module 14 through the terminations 7' and 8' of the cutover module 16, the bus-bar 172, the circuit line 173 and the bus-bar 171 of the cutover plug 17, further connects to the terminations 3, 4, 1, 2 of the external line module 13 through the jumpers 15, and finally connects a subscriber through a twisted pair-wire to form a path, so that the station-side new equipment 19 can provide corresponding service to the subscriber.

The above internal line module 14, cutover module 16 and cutover plug 17 constitute an electrical connection module. The internal line module 14 is connected to the cutover module 16, the cutover plug 17 is inserted into the internal line module 14 and the cutover module 16, so as to separate the jumper-side terminations of the internal line module 14 from the equipment-side terminations of the internal line module 14, and to separate the jumper-side terminations of the cutover module 16 from the equipment-side terminations of the cutover module 16. The jumper-side terminations of the internal line module 14 are electrically connected to the equipment-side terminations of the cutover module 16 through the cutover plug 17.

The internal line module 14 and the cutover module 16 may be connected in a clamping manner.

As can be seen from the above, the internal line module 14 is connected to a cutover module 16, and the jumper-side terminations of the internal line module 14 are electrically connected to the equipment-side terminations of the cutover module 16 through the cutover plug 17. This prevents the new twisted pair-wire of the additionally connected termination of the wire-wrap type internal line module from easily dropping off, and avoids the problems of additional connection limitation and poor additional connection reliability.

When the service of the station-side old equipment needs to be viewed, the cutover plug 17 shall be pulled out from the internal line module 14 and the cutover module 16, so that the terminations 5 and 7 as well as the terminations 6 and 8 are in the normal close state. Then the station-side old equipment can provide service to the subscriber.

Further, on one surface of the cutover plug 17 that contacts the terminations 5 and 6 of the internal line module 14, a bus-bar 174 is provided at a portion that contacts the terminations 5' and 6' of the cutover module 16. The bus-bar 174 is electrically connected to bus bar 172 through a circuit line 175. It can be seen that the jumper-side terminations of the cutover module 16 are electrically connected to the equipment-side terminations of the cutover module 16 through the cutover plug 17.

When the internal line module 14 is not needed to work, the jumpers 15 that connect the terminations 3 and 4 of the external line module 13 with the terminations 5 and 6 of the internal line module 14 can be removed, and the terminations 3 and 4 of the external line module 13 can be connected with the terminations 5' and 6' of the cutover module 16 through jumpers. It can be seen that the station-side new equipment 19 connects to the terminations 5' and 6' of the cutover plug 17 through the terminations 7' and 8' of the cutover module 16, the bus-bar 172, the circuit line 175 and the bus-bar 174 of the cutover plug 17, further connects to the terminations 3, 4, 1, 2 of the external line module 13 through the jumpers, and finally connects a subscriber through a twisted pair-wire to form a path, so that the station-side new equipment 19 can provide related service to the subscriber. At that time, the internal line module 14 is not needed to work, and can be removed upon request.

An electrical connection module includes a cutover module 16, and a cutover plug 17 inserted into the cutover module 16 for separating the jumper-side terminations of the cutover module 16 from the equipment-side terminations of the cutover module 16, wherein, the jumper-side terminations of the cutover module 16 and the equipment-side terminations of the cutover module 16 are electrically connected to each other through the cutover plug 17.

Further, the cutover plug 17 can be pulled out from the cutover module 16 and the internal line module 14, so that the terminations 5' and 7', and 6' and 8' of the cutover module 16 are in the normal close state, i.e., the electrical connected state. It can be seen that the station-side new equipment 19 is connected to the terminations 3, 4, 1 and 2 of the external line module 13 through the terminations 7', 8', 5' and 6' of the cutover module 16 in the electrical connected state and through the jumpers, and finally connects a subscriber through a twisted pair-wire to form a path, so that the station-side new equipment 19 can provide related service to the subscriber. At that time, the cutover plug 17 can be pulled out from the cutover module 16 and the internal line module 14.

Thus, the cutover plug 17 is inserted into the cutover module 16 to constitute a new electrical connection module, wherein, the new electrical connection module includes the cutover module 16, and the cutover plug 17 inserted into the cutover module 16 for separating the jumper-side terminations of the cutover module 16 from the equipment-side terminations of the cutover module 16, and wherein the jumper-side terminations of the cutover module 16 and the equipment-side terminations of the cutover module 16 are electrically connected to each other through the cutover plug 17.

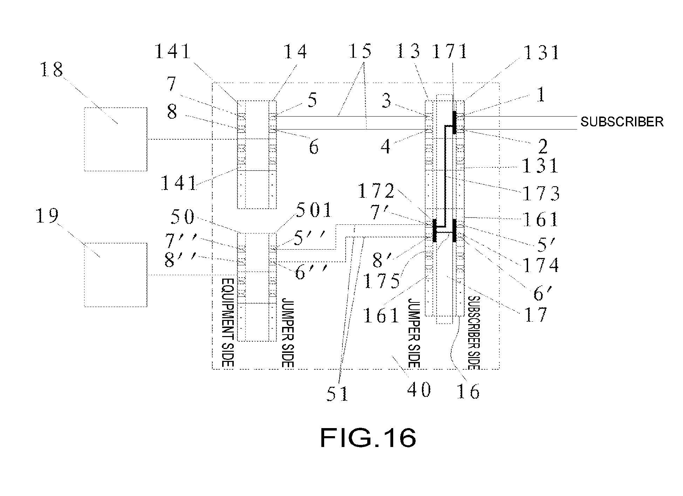

To be noted, the above described is an embodiment of connection between the cutover module 16 and the internal line module 14. Similarly, the cutover module 16 can also be connected to the external line module 13. Referring to Fig. 16, illustrated is a schematic diagram of a connection between the cutover module 16 and the external line module 13. The following descriptions are made by taking an example concerning one interface 501 of an internal line module 50, one interface 161 of the cutover module 16 and one interface 131 of the external line module 13.

The internal line module 50 is added at the internal line module 14 side, the station-side new equipment 19 is connected to the equipment-side terminations 7" and 8" of the internal line module 50 through a twisted pair-wire, and the jumper-side terminations 5" and 6" of the internal line module 50 are electrically connected to the jumper-side terminations 7' and 8' of the cutover module 16 through the jumpers 51. The cutover plug 17 is inserted into the external line module 13 and the cutover module 16, so that the jumper-side terminations 7' and 8' of the cutover module 16 are electrically connected to the subscriber-side terminations 1 and 2 of the external line module 13 through the cutover plug 17. The structure of the cutover plug 17 and the structure of the circuit may be same as those in the above and the following embodiments.

It can be seen that the external line module 13, the cutover module 16 and the cutover plug 17 form a new electrical connection module.

An electrical connection module includes an external line module 13, a cutover plug 17, and a cutover module 16 connected to the external line module 13, wherein the cutover plug 17 is configured to be inserted into the external line module 13 and the cutover module 16 to separate the jumper-side terminations of the external line module 13 from the subscriber-side terminations of the external line module 13, and to electrically connect the subscriber-side terminations of the external line module 13 to the jumper-side terminations of the cutover module 16 through the cutover plug 17.

Similarly, the external line module in the above electrical connection module can be removed upon request to form a new electrical connection module.

An electrical connection module includes a cutover module 16, and a cutover plug 17 inserted into the cutover module 16 for separating the jumper-side terminations of the cutover module 16 from the subscriber-side terminations of the cutover module 16, wherein, the jumper-side terminations of the cutover module 16 and the subscriber-side terminations of the cutover module 16 are electrically connected to each other through the cutover plug 17.

The cutover plug 17 may be printed circuit board.

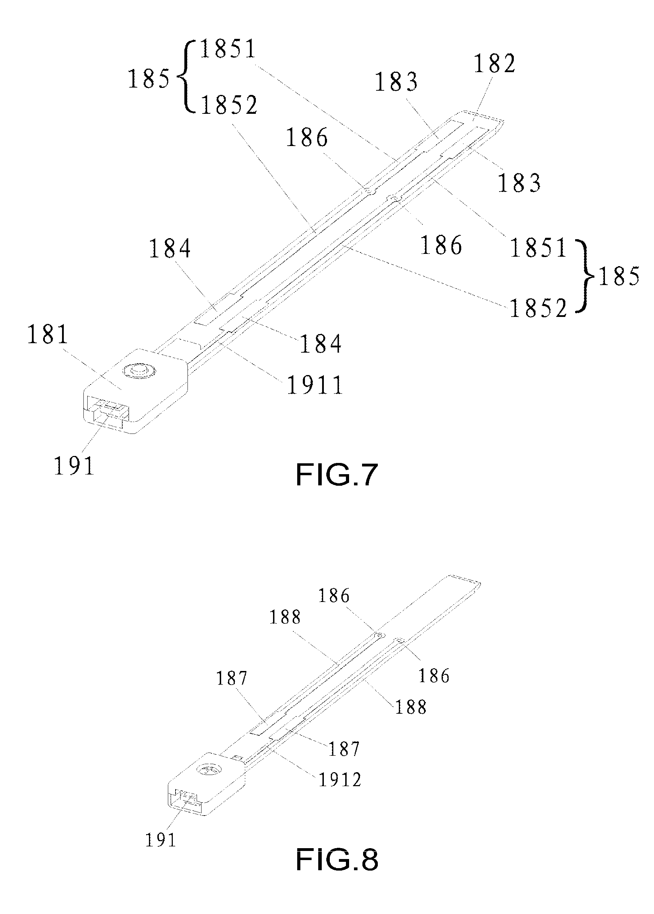

Referring to Fig. 7 and Fig. 8, illustrated are stereogram of the cutover plug 17. The cutover plug 17 includes an action portion 181 and a printed circuit board 182 connected to the action portion 181. Referring to Fig. 7, a bus-bar 184 is provided on one surface of the cutover plug 17 near the action portion 181, and a bus-bar 183 is provided on one end of one surface of the printed circuit board 182. The bus-bars 183 and 184 are connected to each other through a circuit line 185 on which is provided with a through hole 186 that penetrates the upper and lower surfaces of the printed circuit board and divides the circuit line 185 into two parts, i.e., a circuit line 1851 and a circuit line 1852. Referring to Fig. 8, a bus-bar 187 is provided on other surface of the cutover plug 17 at a position corresponding to the bus-bar 184, wherein, the bus-bar 187 and the through hole 186 are connected to each other through a circuit line 188.

There may be two bus-bars 184, two bus-bars 183 and two bus-bars 187.

To be noted, referring to the descriptions of the cutover plug 17 in Fig. 7 and Fig. 8, the circuit line 1851, the through hole 186 and the circuit line 188 correspond to the circuit line 173 in Fig. 3; and the circuit line 1852, the through hole 186 and the circuit line 188 correspond to the circuit line 175 in Fig. 3.

Further, the action portion 181 is provided on the other end of the printed circuit board 182, and both surfaces at the other end of the printed circuit board 182 are provided with bus-bars 191. One bus-bar 191 is connected to one bus-bar 184 through a circuit line 1911, and the other bus-bar 191 is connected to the other bus-bar 184 through a circuit line 1912.

As can be seen from the above, the internal line module 14 is connected to a cutover module 16, and the jumper-side terminations of the internal line module 14 are electrically connected to the equipment-side terminations of the cutover module 16 through the cutover plug 17. This prevents the new twisted pair-wire of the additionally connected termination of the wire-wrap type internal line module from easily dropping off, and avoids the problems of additional connection limitation and poor additional connection reliability.

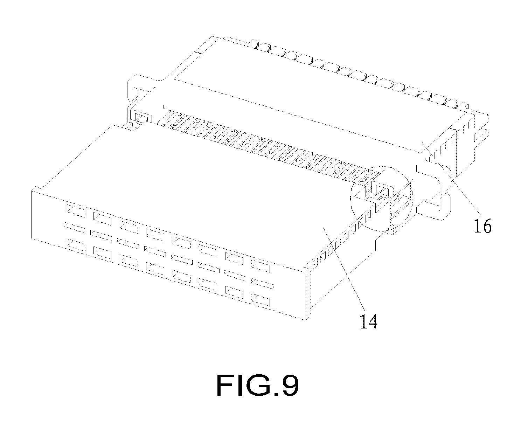

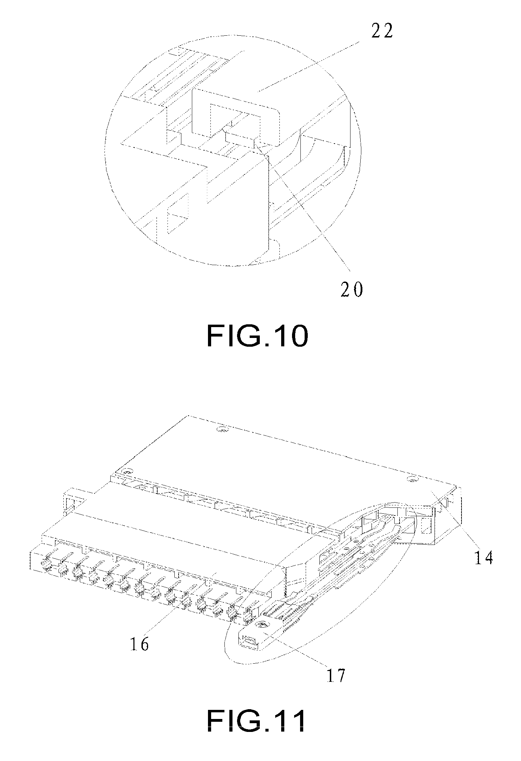

Referring to Fig. 9, illustrated is a schematic diagram of a clamping connection between the internal line module 14 and the cutover module 16. Referring to Fig. 10, illustrated is a partial enlarged drawing of Fig. 9. The upper and lower surfaces of the cutover module extend and form a clamp hook 20, through which the internal line module 14 and the cutover module 16 are clamped together. Meanwhile, the upper and lower surfaces of the cutover module 16 extend above the clamp hook 20 and form a stop portion 22 abutting against the side wall of the notch of the internal line module 14, so as to prevent the clamped internal line module 14 and cutover module 16 from swaying between left and right.

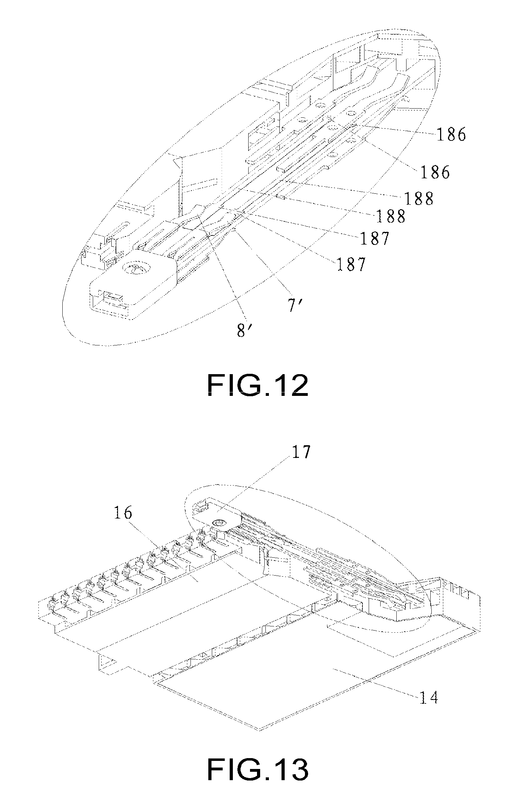

Referring to Fig. 11, illustrated is a schematic diagram of a surface of the cutover plug 17 inserted into the internal line module 14 and the cutover module 16. Referring to Fig. 12, illustrated is a partial enlarged drawing of Fig. 11. Together referring to Fig. 7 and Fig. 8, the terminations 7' and 8' of the cutover module 16 are electrically connected to the terminations 5 and 6 of the internal line module 14 through the bus-bar 187, the circuit line 188, the through hole 186, the circuit line 1851 and the bus-bar 183.

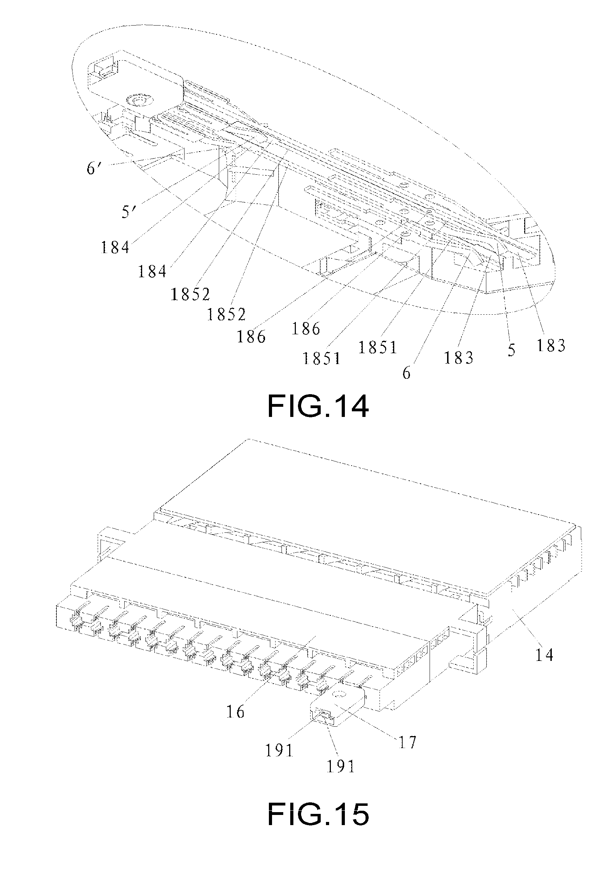

Referring to Fig. 13, illustrated is a schematic diagram of another surface of the cutover plug inserted into the internal line module 14 and the cutover module 16. Referring to Fig. 14, illustrated is a partial enlarged drawing of Fig. 13. Together referring to Fig. 7 and Fig. 8, the terminations 7' and 8' of the cutover module 16 are electrically connected to the terminations 5' and 6' of the cutover module 17 through the bus-bar 187, the circuit line 188, the through hole 186, the circuit line 1852 and the bus-bar 184.

Referring to Fig. 15, illustrated is a schematic diagram of the assembled cutover plug 17, cutover module 16 and internal line module 14. When a test is to be carried out, a connection to the test device can be made through the bus-bar 191, so that the condition of the electrical connections between the cutover plug 17, the cutover module 16 and the internal line module 14 can be tested.

The embodiments of the present invention provide a main distribution frame, including an external line module 13 having jumper-side terminations and subscriber-side terminations, and an internal line module 14 having jumper-side terminations and equipment-side terminations. The jumper-side terminations of the external line module 13 are electrically connected to the jumper-side terminations of the internal line module 14. The main distribution frame further includes a cutover module 16 and a cutover plug 17, the internal line module 14 is connected to the cutover module 16, and the cutover plug 17 is inserted into the internal line module 14 and the cutover module 16. The cutover plug 17 is configured to separate the jumper-side terminations of the internal line module 14 from the equipment-side terminations of the internal line module 14, and to electrically connect the jumper-side terminations of the internal line module 14 and the equipment-side terminations of the cutover module 16 to each other through the cutover plug 17.

Further, the cutover plug 17 separates the jumper-side terminations of the cutover module 16 from the equipment-side terminations of the cutover module 16.

Further, the cutover plug includes a printed circuit board 182. One surface of the printed circuit board 182 is provided with a bus-bar 183 electrically connected to the jumper-side terminations 5 and 6 of the internal line module 14. The other surface of the printed circuit board 182 is provided with a bus-bar 187 electrically connected to the equipment-side terminations 7' and 8' of the cutover module 16. The bus-bar 183 and the bus-bar 187 are electrically connected to each other through a circuit line.

Further, a bus-bar 184 is provided on one surface of the printed circuit board 182 at a position corresponding to the bus-bar 187. The bus-bar 184 is electrically connected to the jumper-side terminations 5' and 6' of the cutover module 16, and it is also electrically connected to the bus-bar 187 through a circuit line.

Further, the jumper-side terminations of the cutover module 16 are electrically connected to the equipment-side terminations of the cutover module 16 through the cutover plug 17.

Further, the cutover plug includes a printed circuit board 182. The printed circuit board (182) includes two surfaces, one surface is provided with a bus-bar 183 electrically connected to the jumper-side terminations 5 and 6 of the internal line module 14, and the other surface is provided with a bus-bar 187 electrically connected to the equipment-side terminations 7' and 8' of the cutover module 16, wherein the bus-bar 183 is electrically connected to the bus-bar 187 through a circuit line.

Further, the cutover plug 17 further includes an action portion 181 connected to one end of the printed circuit board 182.

Further, the upper and lower surfaces of the cutover module 16 extend and form a clamp hook 20 clamped with the internal line module 14.

As can be seen from the above, the internal line module 14 is connected to a cutover module 16, and the jumper-side terminations of the internal line module 14 are electrically connected to the equipment-side terminations of the cutover module 16 through the cutover plug 17. This prevents the new twisted pair-wire of the additionally connected termination of the wire-wrap type internal line module from easily dropping off, and avoids the problems of additional connection limitation and poor additional connection reliability.

The embodiments of the present invention provide a main distribution frame, including an external line module 13 having jumper-side terminations and subscriber-side terminations, and an internal line module 14 having jumper-side terminations and equipment-side terminations, the jumper-side terminations of the external line module 13 are electrically connected to the jumper-side terminations of the internal line module 14, wherein, the main distribution frame further includes a cutover module 16 and a cutover plug 17, the external line module 13 is configured to be connected to the cutover module 16, and the cutover plug 17 is configured to be inserted into the external line module 13 and the cutover module 16, to separate the jumper-side terminations of the external line module 13 from the subscriber-side terminations of the external line module 13, and to electrically connect the subscriber-side terminations of the external line module 13 to the jumper-side terminations of the cutover module 16 through the cutover plug 17. The jumper-side terminations of the internal line module 14 are configured to be electrically connected to the jumper-side terminations of the cutover module 16.

As can be seen from the above, the internal line module 14 is connected to a cutover module 16, and the jumper-side terminations of the internal line module 14 are electrically connected to the equipment-side terminations of the cutover module 16 through the cutover plug 17. This prevents the new twisted pair-wire of the additionally connected termination of the wire-wrap type internal line module from easily dropping off, and avoids the problems of additional connection limitation and poor additional connection reliability.

The embodiments of the present invention provide a cutover method for main distribution frame, including:
connecting a cutover module 16 with an internal line module 14;
connecting equipment-side terminations of the cutover module 16 to a new equipment; and
inserting a cutover plug 17 into the internal line module 14 and the cutover module 16, the cutover plug 17 is configured to separate jumper-side terminations of the internal line module 14 from equipment-side terminations of the internal line module 14, and electrically connect the jumper-side terminations of the internal line module 14 to the equipment-side terminations of the cutover module 16 through the cutover plug 17.

Further, the cutover method including: pulling out the cutover plug 17 from the internal line module 14 and the cutover module 16.

Further, the cutover plug 17 is a printed circuit board 182. The printed circuit board (182) includes two surfaces, one surface is provided with a bus-bar 183 electrically connected to the jumper-side terminations 5 and 6 of the internal line module 14, and the other surface is provided with a bus-bar 187 electrically connected to the equipment-side terminations 7' and 8' of the cutover module 16, wherein the bus-bar 183 is electrically connected to the bus-bar 187 through a circuit line.

Further, a bus-bar 184 is provided on one surface of the printed circuit board 182. The bus-bar 184 is electrically connected to the jumper-side terminations 5' and 6' of the cutover module 16, and electrically connected to the bus-bar 187 through a circuit line.

Further, the cutover method including: connecting the jumper-side terminations of the cutover module 16 to the jumper-side terminations of the external line module 13 through jumpers.

The embodiments of the present invention provide a cutover method for main distribution frame, including:
connecting a cutover module 16 with an external line module 13, and connecting equipment-side terminations of the new internal line module 50 to a new equipment 19 through twisted pair-wire;
electrically connecting jumper-side terminations of the internal line module 14 to jumper-side terminations of the cutover module 16; and
inserting a cutover plug 17 into the external line module 13 and the cutover module 16, the cutover plug 17 is configured to separate jumper-side terminations of the external line module 13 from subscriber-side terminations of the external line module 13, and to electrically connect the subscriber-side terminations of the external line module 13 to the jumper-side terminations of the cutover module 16 through the cutover plug 17.

Further, the cutover method including: pulling out the cutover plug 17 from the external line module 13 and the cutover module 16.

As can be seen from the above, the internal line module 14 is connected to a cutover module 16. The jumper-side terminations of the internal line module 14 are electrically connected to the equipment-side terminations of the cutover module 16 through the cutover plug 17. This prevents the new twisted pair-wire of the additionally connected termination of the wire-wrap type internal line module from easily dropping off, and avoids the problems of additional connection limitation and poor additional connection reliability.

To be noted, the bus-bar 183 may be a first bus-bar, the bus-bar 187 may be a second bus-bar, and the bus-bar 184 may be a third bus-bar. Wherein in the text, the terms "first", "second", "third" and other numerals do not indicate any sequence or order.

In the above, an electrical connection module, a main distribution frame and a cutover method for the main distribution frame according to the embodiments of the present invention are described in detail. For a person skilled in the art, the concrete embodiments and application range can be changed based on the conception of the present invention. In summary, the embodiments in the Description shall not be understood as limitations to the present invention.

## Claims

1. An electrical connection module, wherein the electrical connection module comprises an internal line module (14), a cutover plug (17), and a cutover module (16) connected to the internal line module (14), wherein the cutover plug (17) is configured to be inserted into the internal line module (14) and the cutover module (16), to separate jumper-side terminations of the internal line module (14) from equipment-side terminations of the internal line module (14), and to electrically connect the jumper-side terminations of the internal line module (14) to equipment-side terminations of the cutover module (16) through the cutover plug (17).

2. The electrical connection module according to claim 1, wherein the cutover plug (17) is configured to separate jumper-side terminations of the cutover module (16) from equipment-side terminations of the cutover module (16).

3. The electrical connection module according to claim 2, wherein the cutover plug (17) comprises a printed circuit board (182), the printed circuit board (182) comprises two surfaces, one surface is provided with a first bus-bar (183) electrically connected to the jumper-side terminations (5, 6) of the internal line module (14), and the other surface is provided with a second bus-bar (187) electrically connected to the equipment-side terminations (7', 8') of the cutover module (16), wherein the first bus-bar (183) is electrically connected to the second bus-bar (187) through a circuit line.

4. The electrical connection module according to claim 3, wherein a third bus-bar (184) is provided on the one surface of the printed circuit board (182) at a position corresponding to the second bus-bar (187), the third bus-bar (184) is electrically connected to the jumper-side terminations (5', 6') of the cutover module (16), and is also electrically connected to the second bus-bar (187) through a circuit line.

5. The electrical connection module according to claim 4, wherein there are two third bus-bars (184), and each of the two surfaces of the printed circuit board (182) is provided with one bus-bar (191), wherein one of the bus-bars (191) is electrically connected to one of the third bus-bars (184) through a circuit line (1911), and the other of the bus-bars (191) is electrically connected to the other of the third bus-bars (184) through a circuit line (1912).

6. The electrical connection module according to claim 1, wherein jumper-side terminations of the cutover module (16) are electrically connected to the equipment-side terminations of the cutover module (16) through the cutover plug (17).

7. The electrical connection module according to claim 6, wherein a third bus-bar (184) is provided on one surface of the printed circuit board (182), and the third bus-bar (184) is electrically connected to the jumper-side terminations (5', 6') of the cutover module (16); a second bus-bar (187) is provided on the other surface of the printed circuit board (182) at a position corresponding to the third bus-bar (184), and is electrically connected to the equipment-side terminations (7', 8') of the cutover module (16); the second bus-bar (187) is configured to be electrically connected to the third bus-bar (184) through a circuit line.

8. The electrical connection module according to claim 1, wherein the cutover plug (17) comprises a printed circuit board (182); the printed circuit board (182) comprises two surfaces, one surface is provided with a first bus-bar (183) electrically connected to the jumper-side terminations (5, 6) of the internal line module (14), and the other surface is provided with a second bus-bar (187) electrically connected to the equipment-side terminations (7', 8') of the cutover module (16); the first bus-bar (183) is configured to be electrically connected to the second bus-bar (187) through a circuit line.

9. The electrical connection module according to claim 8, wherein the cutover plug (17) further comprises an action portion (181) connected to one end of the printed circuit board (182).

10. The electrical connection module according to claim 1, wherein the upper and lower surfaces of the cutover module (16) extend and form a clamp hook (20) clamped with the internal line module (14).

11. An electrical connection module, wherein the electrical connection module comprises an external line module (13), a cutover plug (17), and a cutover module (16) connected to the external line module (13), wherein the cutover plug (17) is configured to be inserted into the external line module (13) and the cutover module (16), to separate jumper-side terminations of the external line module (13) from subscriber-side terminations of the external line module (13), and to electrically connect the subscriber-side terminations of the external line module (13) to jumper-side terminations of the cutover module (16) through the cutover plug (17).

12. An electrical connection module, wherein the electrical connection module comprises a cutover module (16), and a cutover plug (17) inserted into the cutover module (16), wherein the cutover plug (17) is configured to separate jumper-side terminations of the cutover module (16) from equipment-side terminations of the cutover module (16), and to electrically connect the jumper-side terminations of the cutover module (16) to the equipment-side terminations of the cutover module (16) through the cutover plug (17).

13. An electrical connection module, wherein the electrical connection module comprises a cutover module (16), and a cutover plug (17) inserted into the cutover module (16), wherein the cutover plug (17) is configured to separate jumper-side terminations of the cutover module (16) from subscriber-side terminations of the cutover module (16), and electrically connect the jumper-side terminations of the cutover module (16) to the subscriber-side terminations of the cutover module (16) through the cutover plug (17).

14. A main distribution frame, wherein the main distribution frame comprises an external line module (13) having jumper-side terminations and subscriber-side terminations, and an internal line module (14) having jumper-side terminations and equipment-side terminations, wherein the jumper-side terminations of the external line module (13) are configured to be electrically connected to the jumper-side terminations of the internal line module (14), the main distribution frame further comprises a cutover module (16) and a cutover plug (17), the internal line module (14) is configured to be connected to the cutover module (16), and the cutover plug (17) is configured to be inserted into the internal line module (14) and the cutover module (16), to separate the jumper-side terminations of the internal line module (14) from the equipment-side terminations of the internal line module (14), and to electrically connect the jumper-side terminations of the internal line module (14) to the equipment-side terminations of the cutover module (16) through the cutover plug (17).

15. The main distribution frame according to claim 14, wherein the cutover plug (17) is configured to separate the jumper-side terminations of the cutover module (16) from the equipment-side terminations of the cutover module (16).

16. The main distribution frame according to claim 15, wherein the cutover plug comprises a printed circuit board (182); the printed circuit board (182) comprises two surfaces, one surface is provided with a first bus-bar (183) electrically connected to the jumper-side terminations (5, 6) of the internal line module (14), and the other surface is provided with a second bus-bar (187) electrically connected to the equipment-side terminations (7', 8') of the cutover module (16), and the first bus-bar (183) is configured to be electrically connected to the second bus-bar (187) through a circuit line.

17. The main distribution frame according to claim 16, wherein a third bus-bar (184) is provided on the one surface of the printed circuit board (182) at a position corresponding to the second bus-bar (187), the third bus-bar (184) is configured to be electrically connected to the jumper-side terminations (5', 6') of the cutover module (16), and to be also electrically connected to the second bus-bar (187) through a circuit line.

18. The main distribution frame according to claim 14, wherein the jumper-side terminations of the cutover module (16) are electrically connected to the equipment-side terminations of the cutover module (16) through the cutover plug (17).

19. The main distribution frame according to claim 14, wherein the cutover plug comprises a printed circuit board (182) ; the printed circuit board (182) comprises two surfaces, one surface is provided with a first bus-bar (183) electrically connected to the jumper-side terminations (5, 6) of the internal line module (14), and the other surface is provided with a second bus-bar (187) electrically connected to the equipment-side terminations (7', 8') of the cutover module (16), and the first bus-bar (183) is configured to be electrically connected to the second bus-bar (187) through a circuit line.

20. A main distribution frame, wherein the main distribution frame comprises an external line module (13) having jumper-side terminations and subscriber-side terminations, and an internal line module (14) having jumper-side terminations and equipment-side terminations, the jumper-side terminations of the external line module (13) are configured to be connected to the jumper-side terminations of the internal line module (14), wherein the main distribution frame further comprises a cutover module (16) and a cutover plug (17), the external line module (13) is configured to be connected to the cutover module (16), and the cutover plug (17) is configured to be inserted into the external line module (13) and the cutover module (16), to separate the jumper-side terminations of the external line module (13) from the subscriber-side terminations of the external line module (13), and to electrically connect the subscriber-side terminations of the external line module (13) to the jumper-side terminations of the cutover module (16) through the cutover plug (17), and wherein the jumper-side terminations of the internal line module (14) are electrically connected to the jumper-side terminations of the cutover module (16).

21. A cutover method for main distribution frame, wherein the cutover method for main distribution frame comprises:
connecting a cutover module (16) with an internal line module (14);
connecting equipment-side terminations of the cutover module (16) to a new equipment; and
inserting a cutover plug (17) into the internal line module (14) and the cutover module (16), the cutover plug (17) is configured to separate jumper-side terminations of the internal line module (14) from equipment-side terminations of the internal line module (14), and to electrically connect the jumper-side terminations of the internal line module (14) to the equipment-side terminations of the cutover module (16) through the cutover plug (17).

22. The cutover method according to claim 21, further comprising: pulling out the cutover plug (17) from the internal line module (14) and the cutover module (16).

23. A cutover method for main distribution frame, wherein the cutover method for main distribution frame comprises:
connecting a cutover module (16) with an external line module (13), and connecting equipment-side terminations of a new internal line module (50) to a new equipment (19) through twisted pair-wire;
electrically connecting jumper-side terminations of an internal line module (14) to jumper-side terminations of the cutover module (16); and
inserting a cutover plug (17) into the external line module (13) and the cutover module (16), the cutover plug (17) is configured to separate jumper-side terminations of the external line module (13) from subscriber-side terminations of the external line module (13), and to electrically connect the subscriber-side terminations of the external line module (13) to the jumper-side terminations of the cutover module (16) through the cutover plug (17).

24. The cutover method according to claim 23, further comprising: pulling out the cutover plug (17) from the external line module (13) and the cutover module (16).

25. A cutover plug, wherein the cutover plug comprises: an insulation board body, a first bus-bar (183) and a second bus-bar (187); wherein
the insulation board body is configured to have two surfaces, one surface is provided with the first bus-bar (183) and the other surface is provided with the second bus-bar (187), and the first bus-bar (183) is configured to be conductively connected to the second bus-bar (187).

26. The cutover plug according to claim 25, wherein a through hole is provided between two surfaces on the insulation board body, and the first bus-bar (183) and the second bus-bar (187) are configured to be connected to each other through the through hole.

27. The cutover plug according to claim 25, wherein a third bus-bar (184) is conductively connected to the second bus-bar (187), the second bus-bar (187) is configured to be provided on the same surface of the insulation board body where the first bus-bar (183) is provided.

28. The cutover plug according to claim 27, wherein the third bus-bar (184) is connected to the second bus-bar (187) through the through hole.

29. The cutover plug according to claim 28, wherein there are two third bus-bars (184), and each of the two surfaces of the insulation board body is provided with one bus-bar (191), wherein one of the bus-bars (191) is configured to be electrically connected to one of the third bus-bars (184) through a circuit line (1911), and the other of the bus-bars (191) is configured to be electrically connected to the other of the third bus-bars (184) through a circuit line (1912).

30. The cutover plug according to any one of claims 25 to 29, wherein the insulation board body is a printed circuit board, or a plastic board, or a rubber board or a wooden board.
